# EUROPEAN PATENT APPLICATION

(11) **EP 1 698 735 A1**
(43) Date of publication of application: **06.09.2006**
(21) Application number: 06380018.9
(22) Date of filing: 23.01.2006
(51) Int. Cl.: E03F 1/00

(54) **Vacuum and pressure toilet system**

(30) Priority: 25.01.2005 ES 200500135
(71) Applicant: Toral Technical Trade, S.L., 28023 Madrid (ES)
(72) Inventor: Orellana Santos, Manuel, 28023 Madrid (ES); Cortizo Rodriguez, Jose Luis, 28023 Madrid (ES)
(74) Representative: Carpintero Lopez, Francisco

(57) **Abstract**

It consists of a compact unit for installation preferably in railway carriages, aircraft, and ships. It incorporates a pressurised water tank (4) which is connected to a main clean water tank (1) and from which water is sent which is discharged through some sprays (14) onto the interior of the toilet (3). In addition it has an intermediate discharge tank (5) located between the outlet of the toilet (3) and a main soil water tank (2), which connects with the toilet (3) through an inlet valve (6) which opens after establishing the vacuum inside the intermediate discharge tank (5) for the filling thereof with soil water from the toilet (3), and which connects with the main soil water tank (2) through an outlet valve (7) which opens after pressurising the intermediate discharge tank (5).

## Description

### OBJECT OF THE INVENTION

The present invention relates to a toilet vacuum and pressure system of application in railway trains, aircraft or others, in which it is necessary to have units of stand-alone operation connected to a main clean water tank and a main soil water tank.

The object of the invention is that the system be constituted in a stand-alone unit associated with a single toilet, which has means for control of the discharge of its soil water with intervention of vacuum and pressurisation phases in accordance with a monitored cycle in which a series of elements participate, mounted and interrelated for the purpose of guaranteeing optimisation in the consumption of water and air, as well as in the time employed during the cycle.

### BACKGROUND OF THE INVENTION

The Patent of invention US 4,521,925 relates to a vacuum system for lavatories employed in commercial passenger aircraft which includes a toilet bowl and a tank which receives the soil water of the toilet, the tank being at a pressure less than that of the surrounding atmosphere. The system incorporates a flush valve which provides passage for the waste from the toilet into the tank and a water inlet valve which introduces clean water onto the interior of the toilet after the actuation of a same push-switch and in accordance with a specific sequence. The tank has an outlet valve to proceed to the emptying thereof when the airliner has landed.

The flush valve which allows the soil water to pass from the toilet to the tank consists of a flexible membrane which is normally closed, on actuating the push-switch a solenoid is activated which determines the opening of a vacuum accumulator which causes suction in the line that connects with the membrane determining the elevation of said membrane and giving free course for the passage of soil water into the tank.

The patent of invention US 5,956,780 relates to a system for the flushing of toilets by vacuum specially conceived for the use thereof in railway carriages which, like the system described above incorporates a toilet and a tank connected by means of a discharge line in which the corresponding flush valve is found, having a separator connected to the upper face of the tank which separates the air from the soil water coming from the toilet so that the air is conducted through a valve toward a vacuum fan. On activating a push-switch, the fan applies a suction effect on the flush valve located between the toilet and the tank determining its opening to facilitate the egress of the soil water into the tank.

On the other hand the patent of invention US 6,453,481 relates to a vacuum system of application to toilets which incorporates a vacuum control valve which is located between a tank and a vacuum pump. This valve is operated by means of a control unit between an open and closed position in order to control the connection between the tank and the vacuum pump. In addition the vacuum control valve is connected with the flush valve of the toilet to the tank to control the discharge into the tank.

Usually the vacuum systems found on the market have a central tank for several toilets for which reason they cannot be installed easily as stand-alone systems.

Other problems that arise are in relation with the complexity of the same which determine high cycle times, with the consequent energy consumption; also the air and water consumptions prove to be excessive.

Moreover they have to work at high pressures to achieve an effective vacuum, which results in acoustic pollution, constituting an important source of noise and vibration. The techniques for obtaining a vacuum are complex and expensive, being usually based on the use of Venturi systems of high power consumption.

### DESCRIPTION OF THE INVENTION

The toilet vacuum and pressure system which is disclosed in this invention overcomes the problems described by the integration of its constituent elements in a stand-alone compact assembly which receives clean water from a main tank and which discharges the faecal water into a soil water tank, which assembly is distinguished by the incorporation of an intermediate discharge tank which combines the vacuum and the pressurisation, which acts in combination with a series of units in accordance with a monitored process which guarantees an optimisation in the consumption of water and air, and a reduction of the response time.

The system has a clean water pressurised tank of reduced dimensions connected to the aforementioned main tank, of approximately 1 litre in capacity, which contains enough water for flushing the toilet, which water is sent through several pipes to some sprays located in the toilet from which the clean water is projected under pressure. The tank is pressurised by compressed air and at its outlet has a cut-off valve which prevents the water from dripping from the sprays on completion of the discharge when it has been left without pressure.

In addition at the outlet of the tank there can be a dosing unit of germicidal, fungicidal and bactericidal disinfectant.

The sprays are connected at atmospheric pressure in order to increase their effectiveness and enhance their safety and avoid possible accidents for the user through a pressure drop in the bowl.

On concluding the discharge cycle the clean water tank is filled again, governed by a level detector, with the water coming from the main tank and it will be pressurised with air from a compressed air system when the following working cycle is carried out.

The intermediate discharge tank is located after the toilet and mounted prior to the main soil water tank or the sewage system to which each of the vacuum systems is connected.

This intermediate discharge tank is connected to the compressed air system. On activating the corresponding flushing push-switch the vacuum is established inside it, once the drop in pressure is attained an inlet valve connected to the same opens which connects it with the toilet and it is filled with the soil water contained in its interior. Next it is pressurised with air through a pneumatic inlet port until reaching a specific pressure, at which time an outlet valve opens for emptying the tank, the soil water of which will be conducted toward the main soil water tank or sewage system.

The intermediate tank has a single pneumatic inlet port, through which the vacuum is established inside or it is pressurised, the purpose being to make it simpler, more watertight and safer.

The vacuum is achieved by means of a pneumatic pump and the pressures involved are low, which signifies a saving in compressed air and a low level of noise.

The inlet and outlet valves which isolate the intermediate tank are of the laminar type, they are preferably constructed in engineering plastics to guarantee their reduced weight and low corrosion and they can be actuated by means of a relay or by means of a linear actuator which can be pneumatic, electric or hydraulic, located on the valve itself advantageously reducing the response time and therefore its working cycle.

The moving parts of the valve incorporate a maintenance-free greasing system. The blade closing the valve has a friction-inhibiting treatment which favours its operation and it can be activated directly by the actuator by means of a rod. The blade is of reduced thickness, has sharp edges and a housing which is also of reduced thickness for the purpose of preventing the solid waste from blocking it.

The solenoid valves which determine the operation of the actuators are usually mounted on the latter for the purpose of reducing response times.

The system has a control unit which monitors the sequential operation of the valves in accordance with a programmed and automated cycle, thereby managing all the actuations in a safe and reliable manner.

The system also incorporates a device for permanent detection of the status of the toilet seat lid, open or closed, which detects a prolonged absence of use of the system corresponding to the closed position for the purpose of activating the complete cycle and thereby maintaining the system in optimum conditions of use at all times.

This system can make use of different types of material, such as stainless steel, fibre, ceramics, etc., and its compactness make it of special application, among others, for railway carriages, seagoing vessels, aircraft, for installation in buildings or in urban furniture.

### DESCRIPTION OF THE DRAWINGS

To complete the description that is being made and with the object of assisting in a better understanding of the characteristics of the invention, in accordance with a preferred example of practical embodiment thereof, the same is accompanied, as an integral part of said description, with a set of drawings wherein by way of illustration and not restrictively, the following has been represented:

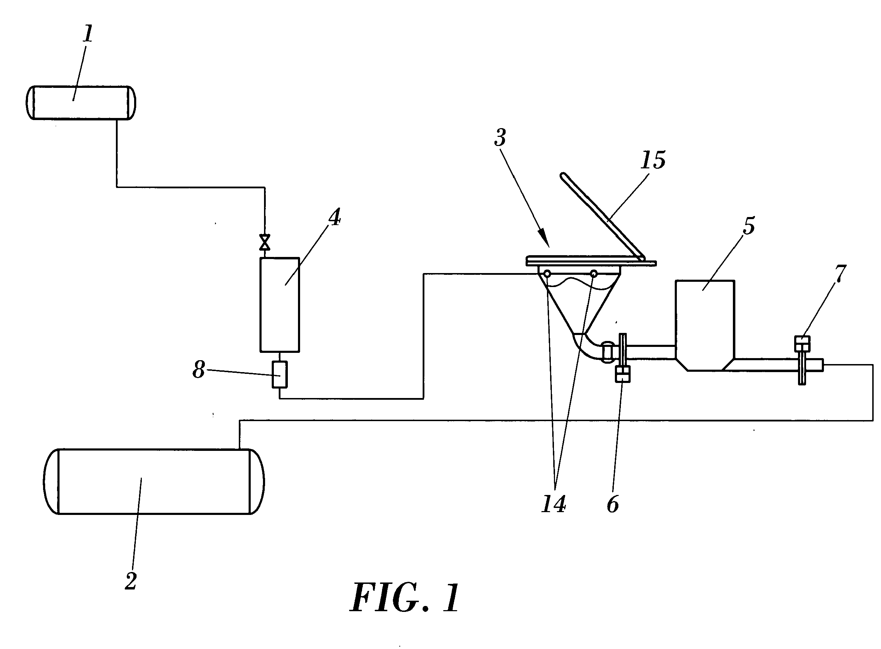

Figure 1. - It shows a schematic view of the toilet vacuum and pressure stand-alone system in which the elements are seen which intervene in the circulation of clean and soil water.

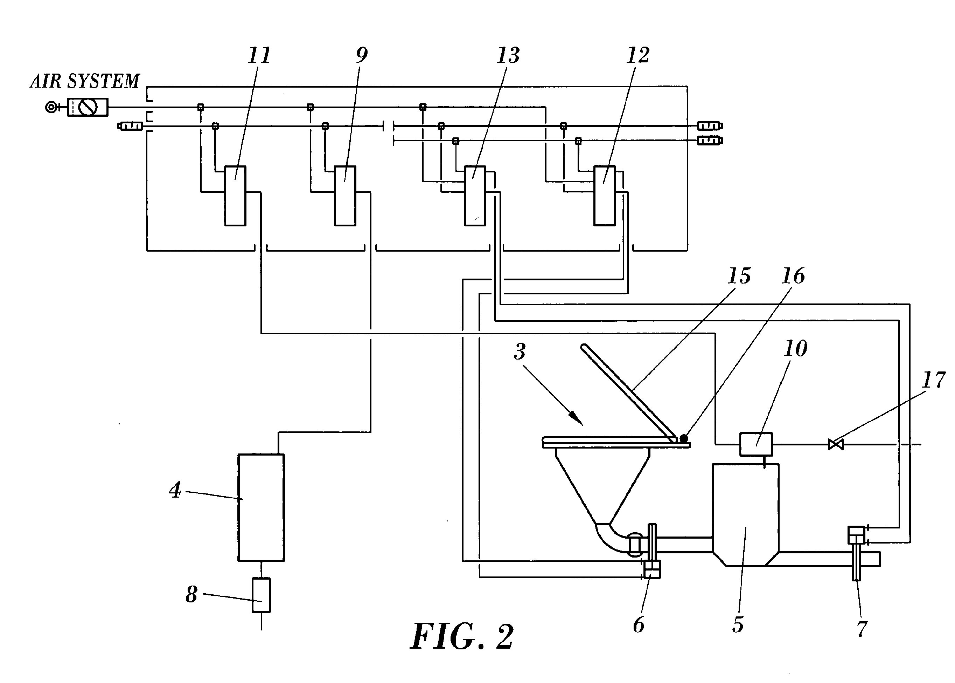

Figure 2. - It shows a schematic view of the system in which the connection is observed between the elements of the same in relation with the compressed air system.

### PREFERRED EMBODIMENT OF THE INVENTION

The toilet vacuum and pressure stand-alone system which constitutes the object of this invention is of application between a main clean water tank (1) located upstream to the toilet (3) and a main soil water tank (2) located downstream, which can be installed in mobile units such as railway carriages, airliners, ships or in fixed units, equipped in all cases with a pressurised air line.

The system is distinguished fundamentally in that it consists of a compact unit which incorporates a pressurised water tank (4) of reduced dimensions which is connected to the main clean water tank (1) and from which water is sent that is discharged through some sprays (14) onto the interior of the toilet (3) on activating a flushing push-switch, and it also has an intermediate discharge tank (5) located between the outlet of the toilet (3) and the main soil water tank (2), which connects with the toilet (3) through an inlet valve (6), which opens after establishing the vacuum inside the intermediate discharge tank (5), for receiving soil water coming from the toilet (3), and which connects with the main soil water tank (2) by means of an outlet valve (7) which opens after pressurising the intermediate discharge tank (5) to evacuate the soil water.

The pressurised water tank (4) connects with the pressurised air line by means of a first solenoid valve (9) which determines the ingress of air into the pressurised tank (4) for discharge under pressure of the clean water into the toilet (3), the depressurisation thereof taking place through a combined movement of a cut-off valve (8), located in its outlet which avoids continuous leakage through the sprays (14) in the absence of pressure, and the first solenoid valve (9).

The intermediate discharge tank (5) is connected with the pressurised air line through a single pipe connected to a group of valves (10) governed by a second solenoid valve (11) which sequentially manages the phase of establishing the vacuum in the intermediate discharge tank (5) for the filling thereof with soil water coming from the toilet (3) and the pressurisation phase, in combination with a valve (17), for the emptying thereof.

The inlet valve (6) is likewise governed by a third solenoid valve (12) which opens to evacuate the soil water of the toilet (3) into the intermediate discharge tank (5) once the vacuum in the latter is formed.

The outlet valve (7) is governed by a fourth solenoid valve (13) which opens for passage of the soil water from the intermediate discharge tank (5) once the latter has been pressurised.

The system incorporates a device for permanent detection (16) of the closed position of the lid (15) of the toilet (3), which detects its prolonged absence of use in order to activate the operation of the system and maintain its operative condition.

The first and second solenoid valves (9, 11) are located in the group of valves (10), and the third and fourth solenoid valves (12, 13) are located in the inlet (6) and outlet (7) valves, on which they act to reduce thereby the response time.

It is necessary to point out that the soil water tank (2) can be of the septic pit type and that the outflow of soil water can be connected to the public or private sewage system and can be made through a network of pipes in suction, or through a tank in suction.

## Claims

1. - Toilet vacuum and pressure stand-alone system, of application between a main clean water tank (1) located upstream of the toilet (3) and a main soil water tank (2) located downstream, which can be installed in mobile units such as railway carriages, aircraft, ships or in fixed units, equipped with a pressurised air line, **characterised in that** it comprises a compact unit which incorporates a pressurised water tank (4) of reduced dimensions which is connected to the main clean water tank (1) and from which water is sent which is discharged through some sprays (14) onto the interior of the toilet (3) on activating a flushing push-switch, and it also has an intermediate discharge tank (5) located between the outlet of the toilet (3) and the main soil water tank (2) which connects with the toilet (3) through an inlet valve (6) which opens after establishing the vacuum inside the intermediate discharge tank (5) for the filling thereof with soil water coming from the toilet (3), and which connects with the main soil water tank (2) by means of an outlet valve (7) which opens after pressurising the intermediate discharge tank (5) to evacuate the soil water.

2. - Toilet vacuum and pressure stand-alone system according to claim 1 **characterised in that** the pressurised water tank (4) connects with the pressurised air line by means of a first solenoid valve (9) which determines the intake of air into the pressurised tank (4) for discharge under pressure of the clean water into the toilet (3).

3. - Toilet vacuum and pressure stand-alone system according to claim 1 **characterised in that** the intermediate discharge tank (5) connects with the pressurised air line through a single pipe connected to a set of valves (10) governed by a second solenoid valve (11) which manages sequentially the phase of establishing the vacuum in the intermediate discharge tank (5) for the filling thereof with soil water coming from the toilet (3) and the pressurisation phase for its emptying.

4. - Toilet vacuum and pressure stand-alone system according to claim 1 **characterised in that** the inlet valve (6) is governed by a third solenoid valve (12) which opens to evacuate the soil water of the toilet (3) into the intermediate discharge tank (5) once the vacuum has been established in the latter.

5. - Toilet vacuum and pressure stand-alone system according to claim 1 **characterised in that** the outlet valve (7) is governed by a fourth solenoid valve (13) which opens to give passage to the soil water of the intermediate discharge tank (5) once the latter has been pressurised.

6. - Toilet vacuum and pressure stand-alone system according to claim 1 **characterised in that** it incorporates a device for permanent detection (16) of the closed position of the lid (15) of the toilet (3), which detects the prolonged absence of use thereof to activate the operation of the system and maintain its operative condition.

7. - Toilet vacuum and pressure stand-alone system according to claim 1 **characterised in that** at the outlet of the pressurised water tank (4) there is a cut-off valve (8) which prevents continuous leakage through the sprays (14) in the absence of pressure.

8. - Toilet vacuum and pressure stand-alone system according to claim 1 **characterised in that** the sprays (14) are connected at atmospheric pressure in order to increase their effectiveness and to enhance their safety avoiding possible accidents to the user through a pressure drop in the toilet bowl.

9. - Toilet vacuum and pressure stand-alone system according to preceding claims **characterised in that** the first and the second solenoid valves (9, 11) are located in the set of valves (10), and the third and fourth solenoid valves (12, 13) are located in the inlet (6) and outlet (7) valves, on which they act in order to reduce thereby the response time.

10. - Toilet vacuum and pressure stand-alone system according to claim 1 **characterised in that** the soil water tank (2) is of the septic pit type.

11. - Toilet vacuum and pressure stand-alone system according to claim 1 **characterised in that** the outflow of soil water can be connected to the public or private sewage system.

12. - Toilet vacuum and pressure stand-alone system according to claim 1 **characterised in that** the outflow of soil water can be made to a system of pipes in suction, or to a tank in suction.
